# EUROPEAN PATENT APPLICATION

(11) **EP 4 737 211 A1**
(43) Date of publication of application: **06.05.2026**
(21) Application number: 25210264.5
(22) Date of filing: 22.10.2025
(51) Int. Cl.: B60P 1/00, B65G 25/06

(54) **TRAILER WITH LOADING/UNLOADING WALKING FLOOR**

(30) Priority: 31.10.2024 IT 202400024513
(71) Applicant: Tecnokar Trailers S.r.l., 06049 Spoleto (PG) (IT)
(72) Inventor: LUZZI, Graziano, 06049 SPOLETO (PG) (IT); MARI, Roberto, 06049 SPOLETO (PG) (IT); MAGNINI, Danilo, 06034 FOLIGNO (PG) (IT)
(74) Representative: Baldi, Claudio

(57) **Abstract**

A trailer (100) comprising a chassis (1) mounted on wheels (10), and a walking floor (2) slidingly mounted with respect to the chassis (1) and suitable for supporting the goods to be transported; said walking floor (2) comprising a plurality of slats (20) arranged longitudinally in the trailer, side by side and parallel to each other, so that a space (21) is left between two adjacent slats; the slats (20) slidingly rest on crosspieces (3) arranged transversely on the chassis (1), and each crosspiece (3) has a lower portion (30), an upper portion (31) and a connecting portion (32) that connects the lower portion (30) and the upper portion (31) and which, when viewed in cross-section, has two sides (32a, 32b) with a concave profile, with outward-facing concavity.

## Description

The present invention relates to the transportation sector and concerns a trailer with loading/unloading walking floor.

Hereinafter, the term "trailer" also refers to a semi-trailer. A trailer is a means of transportation that has at least one pair of idler wheels and is suitable for being attached to a motor vehicle, such as a truck, by means of quick coupling/uncoupling means.

Trailers comprise a chassis supported on wheels and a support platform mounted on the chassis, which acts as a support surface for the goods to be transported by the trailer. The chassis of a trailer generally comprises a structure consisting of two longitudinal side members that are transversely connected to each other by means of various types of elements (crosspieces, etc.); such a structure supports a box that is suitable for containing the goods to be transported and acts as support for the road-side part of the trailer (suspensions, etc.).

Trailers with a walking floor are known. Said trailers are mainly used for transporting goods in the agricultural, forestry, and recycling sectors, such as wood chips, waste in big bags, and bulk goods.

The walking floor consists of slats arranged lengthwise in the trailer, side by side and parallel to each other. The slats are configured to translate longitudinally, back and forth, driven by a hydraulic transmission that is usually located under the chassis of the trailer. The slats rest on support crosspieces fixed to the chassis of the trailer, generally by means of welding. The support crosspieces extend in a direction perpendicular to the longitudinal axis of the slats. Therefore, in addition to supporting the slats of the walking floor and allowing the walking floor to be fixed to the side members of the chassis of the trailer, the support crosspieces act as spacers between the walking floor and the chassis of the trailer, creating a space between the walking floor and the chassis of the trailer.

Generally speaking, the support crosspieces have an I-shape and comprise two horizontal wings and one vertical connecting portion that connects the two horizontal wings to each other. A first horizontal wing is fixed to the chassis of the trailer and a second horizontal wing slidably supports the slats of the walking floor. Evidently, the translation of the slats of the walking floor causes the movement of the goods supported by the walking floor until the goods are unloaded from the trailer.

Therefore, the use of trailers with a walking floor has the advantage of saving space for unloading the goods. In fact, the goods can be unloaded at the unloading point without tilting or hydraulically lifting the trailer, greatly facilitating the unloading of the goods inside warehouses and tunnels, under power lines, and on uneven or unstable ground.

Furthermore, the use of trailers with a walking floor allows the goods to be unloaded safely and quickly, without the risk of tipping over.

However, trailers with a walking floor do have drawbacks. In fact, when the goods transported by the trailer consists of very fine granular materials or agricultural raw materials, such as wheat, corn, or soybeans, such materials tend to seep between the adjacent slats of the walking floor, falling into the gap between the floor and the chassis of the trailer.

Due to their I-shape, the support crosspieces tend to trap the materials that pass through the spaces between the slats, creating deposits of materials. As a result, whenever it is necessary to remove the walking floor from the chassis of the trailer, in the event of damage to one of the two parts, or during the maintenance operations of the trailer that require the slats of the walking floor to be removed, it is necessary to thoroughly clean the crosspiece in order to remove the deposit of materials, with an inevitable increase in the time and cost of such operations.

Furthermore, the fact that the support crosspieces are welded to the chassis of the trailer inevitably requires a long and laborious process to remove the walking floor from the chassis of the trailer as necessary in the event of damage to one of the two parts.

The purpose of the present invention is to overcome the drawbacks of the prior art by providing a trailer with a walking floor that prevents the accumulation of materials between the chassis of the trailer and the walking floor.

Another purpose is to provide such a trailer with a walking floor that allows the floor and the chassis of the trailer to be assembled and disassembled easily and quickly.

A further purpose is to provide such a trailer with a walking floor that is simple and quick to manufacture.

These purposes are achieved in accordance with the invention with the characteristics of the attached independent claim.

Advantageous embodiments of the invention are apparent from the dependent claims.

Further features of the invention will become clearer from the detailed description below, which refers to purely illustrative and therefore non-limiting embodiments, illustrated in the accompanying drawings, wherein:
Fig. 1 is a perspective view from the rear of a portion of the trailer according to the invention, illustrating the walking floor;
Fig. 2 is a cross-sectional view of a portion of the walking floor of the trailer, taken along the section plane II-II of Fig. 1;
Fig. 3 is a longitudinal sectional view of a portion of the walking floor of the trailer, taken along the section plane III-III of Fig. 1;
Fig. 4 is an exploded cross-sectional view of a crosspiece illustrating the means used for securing the crosspiece to the chassis of the trailer and the sliding means connecting the crosspiece to the walking floor; and
Fig. 5 is a sectional view like Fig. 4, illustrating a second embodiment of the fixing means for securing the sliding means to the crosspiece.

With the aid of the Figs., a trailer according to the invention, which is generally indicated with reference number 100, is described.

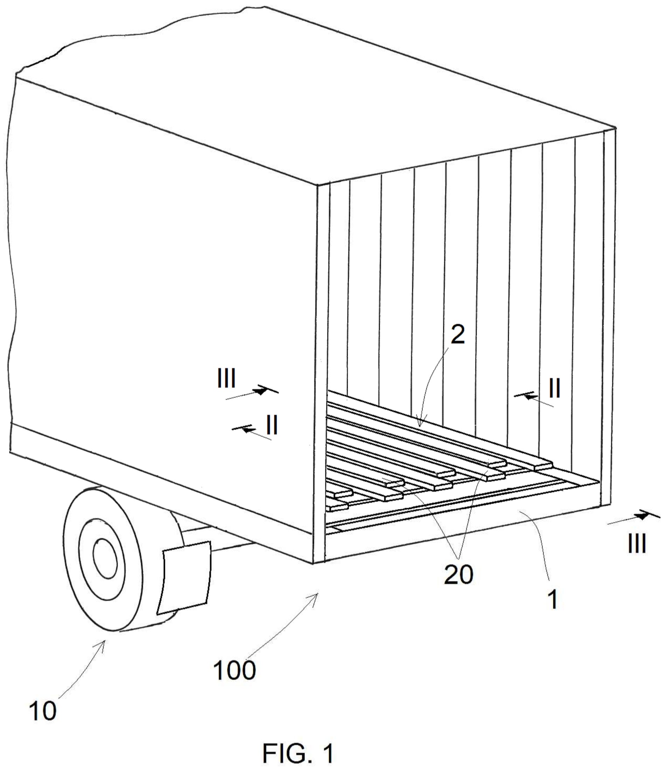

With reference to Fig. 1, the trailer (100) comprises a chassis (1) mounted on wheels (10) and a walking floor (2) mounted so as to slide relative to the chassis (1).

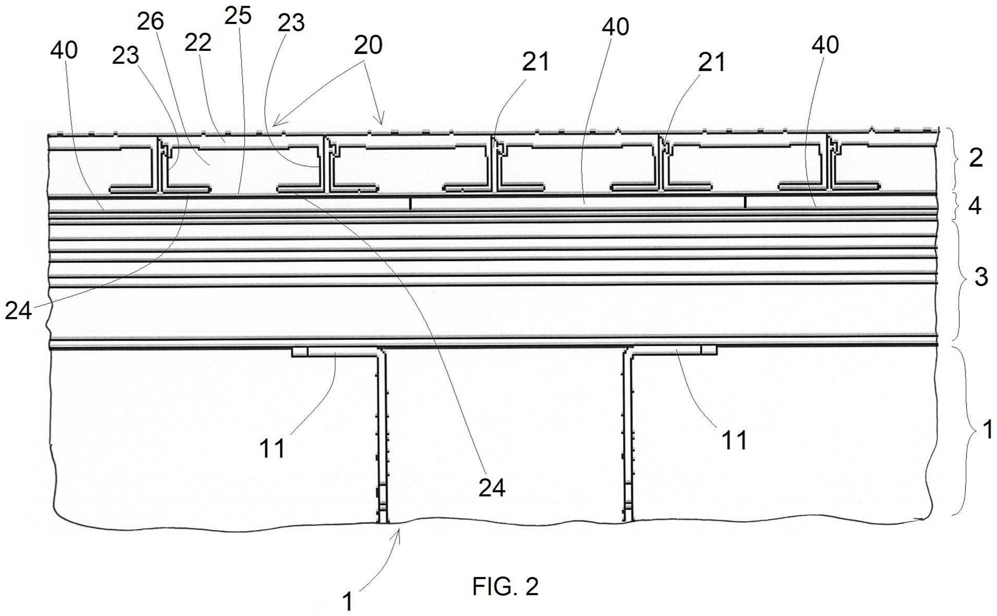

With reference to Fig. 2, the chassis (1) comprises a structure formed by two side-members (11) connected transversely to each other by means of various types of elements (crosspieces, etc.). Such a structure supports a box suitable for containing the goods to be transported, and inferiorly acts as a support for the road-side part of the trailer (suspensions, etc.). The box is inferiorly defined by the walking floor (2).

The walking floor (2) comprises a plurality of slats (20). The slats (20) are profiles with a C-shaped cross-section; therefore, an axis that extends longitudinally along the length of the slat.

Each slat (20) has an upper wall (22), two side walls (23), and two lower walls (24) separated from each other by an opening (25) that provides access to a channel (26) in the slat.

The slats (20) are arranged longitudinally in the trailer, side by side and parallel to each other. To allow the adjacent slats to slide alternately, a space (21) is left between two adjacent slats through which small-sized materials deposited on the chassis (1) under the walking floor (2) can pass.

The slats (20) slidably rest on crosspieces (3) arranged transversely on the chassis (1), i.e., according to a direction perpendicular to the axis of the slats.

The slats (20) are connected to handling means of hydraulic type, which are not shown in the figures as they are well known. The handling means are configured to move the slats (20) back and forth in groups in a longitudinal direction, so as to move the goods arranged on the slats (20) towards an unloading end of the trailer to unload the goods from the trailer, or towards the interior of the trailer to load the goods to be transported.

The slats (20) are made of metal, such as aluminum or steel. Also the crosspieces (3) are made of metal, such as aluminum or steel. Therefore, a friction is created between the slats (20) of the walking floor and the crosspieces (3), which tends to prevent the slats (20) from sliding smoothly on the crosspieces (3).

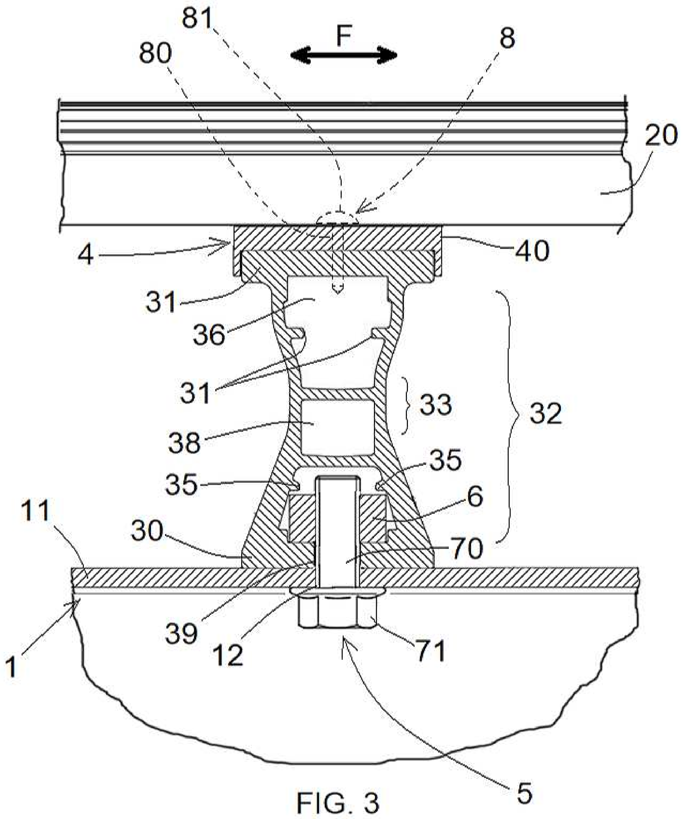

With reference to Fig. 3, to solve this problem, sliding means (4) are interposed between the crosspieces (3) and the slats (20) of the walking floor, so as to facilitate a longitudinal sliding of the slats (20) on the sliding means (4) in the direction of the arrows (F). The sliding means (4) are made of a material with a low coefficient of friction compared to the metallic material of the slats (20). Preferably, the sliding means (4) are made of a plastic material, such as, for example, polytetrafluoroethylene (PTFE).

Each side-member (11) of the chassis comprises an upper surface facing the crosspieces (3) and comprising a plurality of through holes (12) with a vertical axis.

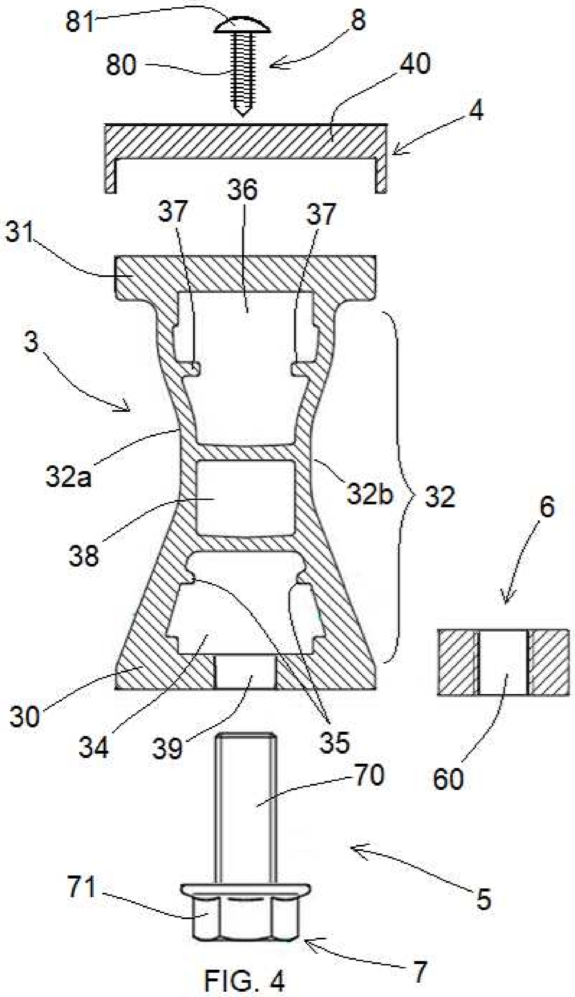

With reference to Fig. 4, each crosspiece (3) comprises:
- a lower portion (30) having a flat surface suitable for abutting against the upper surface of the side-members (11) of the chassis of the trailer,
- an upper portion (31) having a flat surface suitable for supporting the sliding means (4), and
- a connecting portion (32) connecting the lower portion (30) to the upper portion (31).

The sliding means (4) comprise at least one U-bolt (40) with a U-shaped cross-section, which is suitable for being fitted onto the upper portion (31) of each crosspiece. Each U-bolt (40) is positioned under one or more slats (20). In this way, the lower walls (24) of the slats can slide on the U-bolt (40).

The connecting portion (32) of the crosspiece has a central portion (33) disposed halfway the height of the connecting portion. When seen in cross-section, the connecting portion (32) has two sides (32a, 32b) with a concave profile with outward-facing concavity. Otherwise said, the connecting portion (32), in cross section, has a tapered shape with decreasing dimensions going from the lower portion (30) to the central portion (33) of the connecting portion and from the upper portion (31) to the central portion (33) of the connecting portion. The concave profile of the sides (32a, 32b) of the connecting portion differs from the perfectly flat profile of the sides of the connecting portion of traditional I-shaped crosspieces.

Due to the provision of the sides (32a, 32b) with a curved profile, the goods passing through the spaces between the slats (20) of the walking floor tend to slide along the sides (32a, 32b) of the crosspieces, without creating any deposit at the crosspieces.

The crosspiece (3) has a lower seat (34) that extends into the connecting portion (32) above the lower portion (30) of the crosspiece. The lower seat (34) extends longitudinally into the connecting portion (32) for the entire length of the crosspiece. Two ribs (35) extending longitudinally into the lower seat are provided in the lower seat (34).

The crosspiece (3) has an upper seat (36) extending into the connecting portion (32) under the upper portion (31) of the crosspiece. The upper seat (36) extends longitudinally into the connecting portion (32) for the entire length of the crosspiece. Two ribs (37) extending longitudinally into the upper seat are provided in the upper seat (36).

The crosspiece (3) has a lightening channel (38) extending longitudinally in the central portion (33) of the connecting portion (32) for the entire length of the crosspiece. In the event that it is necessary to reduce the height of the crosspieces (3) in order to increase the volume occupied by the goods disposed above the slats (20), the provision of such a lightening channel (38) allows each crosspiece (3) to be cut more or less halfway, so that the flat upper wall delimiting the lightening channel (38) is successively fixed to the chassis of the trailer.

The lower portion (30) of the crosspiece has a longitudinal channel (39) communicating with the lower seat (34) of the crosspiece and extending for the entire length of the crosspiece (3).

With reference to Fig. 3, the upper surface of each side-member (11) of the chassis of the trailer comprises a plurality of through holes (12).

The crosspieces (3) are arranged on the upper surface of the side-members (11) of the chassis of the trailer so that the through holes (12) of the side-members (11) of the chassis of the trailer end into the longitudinal channels (39) of the crosspieces.

Fastening means (5) secure each crosspiece (3) to the chassis (1) of the trailer. The fastening means (5) comprise threaded blocks (6) and screws (7).

Each threaded block (6) has a threaded hole (60). Each screw (7) has a threaded shank (70) and a head (71).

The threaded blocks (6) are disposed in the lower seat (34) of the crosspieces. It should be noted that an upper portion of the threaded block (6) abuts against the ribs (35) of the lower seat (34) of the crosspiece that retains the threaded block in position.

The threaded shank (70) of each screw (7) is inserted into the through hole (12) of the upper surface of the side-member (11) and into the longitudinal channel (39) of the crosspiece, and is then screwed into the threaded hole (60) of the threaded block located in the lower seat (34), until the head (71) of the screw is flush under the upper surface of the side-member (11) of the chassis.

Second fastening means (8) secure the sliding means (4) to the crosspiece (3). By way of example, the second fastening means (8) may comprise self-tapping screws (80), rivets, or nails that are inserted from above into the U-bolts (40), passing through the U-bolts (40) and the upper portion (31) of the crosspiece and ending in the upper seat (36) of the crosspiece. In such a case, the fastening means have a head (81) that is positioned in the opening (25) that provides access to the channel (26) of the slat, without therefore interfering with the lower walls (24) of the slat during the sliding of the slat.

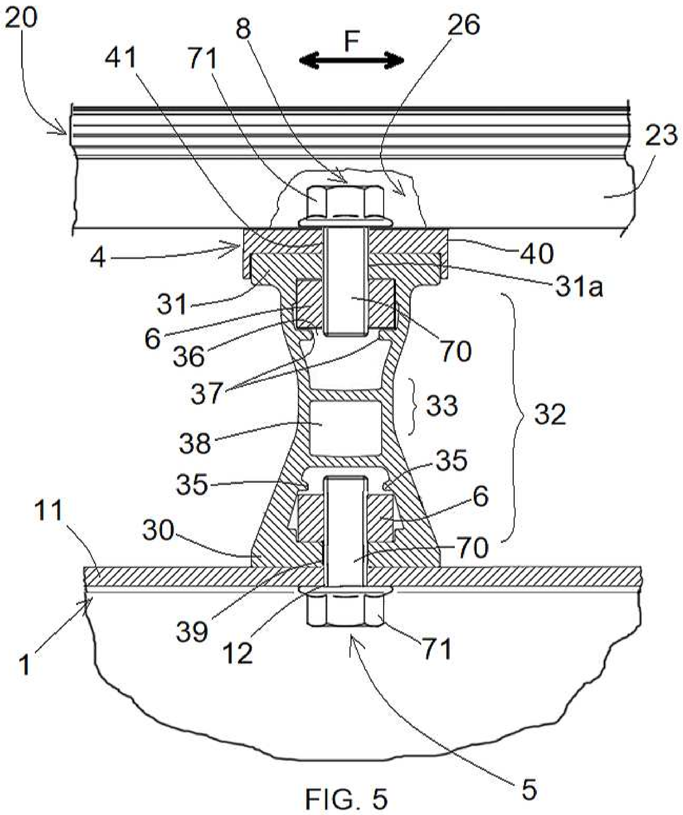

With reference to Fig. 5, the second fastening means (8) may comprise threaded blocks (6) and screws (7). In such a case, the upper portion (31) of the crosspiece has a longitudinal channel (31a) that extends in the upper portion (31) of the crosspiece for the entire length of the crosspiece (3), and communicates with the upper seat (36) of the crosspiece. The U-bolt (40) of the sliding means has a through hole (41).

The threaded block (6) is disposed in the upper seat (36) of the crosspiece so that a lower portion of the threaded block (6) abuts against the ribs (37) of the upper seat (36) of the crosspiece that retain the threaded block (6) in position. At this point, a screw (7) is inserted into the hole (41) of the U-bolt, passing through the longitudinal channel (31a) of the upper portion of the crosspiece, and is screwed into the threaded block (6) disposed in the upper seat (36) of the crosspiece. The head (71) of the screw presses on the U-bolt (40) and is positioned in the opening (25) that provides access to the channel (26) of the slat, without therefore interfering with the lower walls (24) of the slat during the sliding of the slat.

The threaded blocks (6) are made of steel and are specially designed and customized according to the dimensions of the lower and upper seats (34, 36) of the crosspiece.

Numerous modifications can be made to the present embodiment of the invention, which are within the reach of an expert of the field and fall in any case within the scope of the invention as disclosed by the attached claims.

## Claims

1. Trailer (100) comprising:
- a chassis (1) mounted on wheels (10); said chassis (1) comprising a structure formed by two side-members (11) connected transversely to each other;
- a walking floor (2) mounted so as to slide with respect to the chassis (1) and suitable for supporting the goods to be transported; said walking floor (2) comprising a plurality of slats (20) arranged longitudinally in the trailer, side by side and parallel to each other, so that a space (21) suitable for being crossed by small-sized materials is left between two adjacent slats;
- handling means connected to the slats (20) of the walking floor and configured so as to move the slats (20) back and forth in groups in a longitudinal direction, so as to move the goods arranged on the slats towards an unloading end of the trailer to unload the goods from the trailer, or towards the interior of the trailer to load the goods to be transported in the trailer;
- crosspieces (3) interposed between the walking floor (2) and the chassis (1) to slidingly support the slats (20) of the walking floor (2); said crosspieces (3) being arranged on the chassis (1) in a direction orthogonal to the axis of the slats;
- sliding means (4) interposed between the crosspieces (3) and the slats (20) of the walking floor; said sliding means (4) being made of a material having a low coefficient of friction; and
- fastening means (5) for fastening each crosspiece (3) to the chassis (1) of the trailer;
wherein each side-member (11) of the chassis comprises an upper surface facing the crosspieces (3) and each crosspiece (3) comprises:
- a lower portion (30) having a flat surface suitable for abutting against the upper surface of the side-members (11) of the chassis of the trailer;
- an upper portion (31) having a flat surface suitable for supporting the sliding means (4), and
- a connecting portion (32) connecting the lower portion (30) to the upper portion (31) and having a central portion (33) disposed halfway the height of the connecting portion (32);
**characterized by** the fact that,
when seen in cross-section, the connecting portion (32) of each crosspiece has two sides (32a, 32b) with a concave profile with outward-facing concavity.

2. The trailer (100) according to claim 1, wherein the upper surface of each side-member (11) of the chassis (1) comprises a plurality of through holes (12);
each crosspiece (3) comprises:
- a lower seat (34) that extends into the connecting portion (32) above the lower portion (30) of the crosspiece; said lower seat (34) extending longitudinally into the connecting portion (32) for the entire length of the crosspiece; and
- a longitudinal channel (39) that extends into the lower portion (30) of the crosspiece for the entire length of the crosspiece (3), and communicating with the lower seat (34) of the crosspiece;
said crosspieces (3) being arranged on the upper surface of the side-members (11) of the chassis of the trailer, so that the through holes (12) of the side-members (11) of the chassis of the trailer end into the longitudinal channels (39) of the crosspieces.

3. The trailer (100) according to claim 2, wherein the fastening means (5) for fastening each crosspiece (3) to the chassis (1) of the trailer comprise threaded blocks (6) and screws (7);
each threaded block (6) having a threaded hole (60);
each screw (7) having a threaded shank (70) and a head (71);
the threaded blocks (6) being disposed in the lower seats (34) of the crosspieces; and
the threaded shank (70) of each screw (7) being inserted into the through hole (12) of the upper surface of the side-member (11) and in the longitudinal channel (39) of the crosspiece and being screwed into the threaded hole (60) of the threaded block, so that the head (71) of the screw abuts under the upper surface of the side-member (11) of the chassis.

4. The trailer (100) according to claim 3, wherein said crosspiece comprises two ribs (35) extending longitudinally in the lower seat (34) of each crosspiece; so that an upper portion of the threaded block (6) abuts against the ribs (35) of the lower seat (34) of the crosspiece, so that the threaded block is retained in position in the lower seat (34) of the crosspiece.

5. The trailer (100) according to any of claims 1 to 4, wherein each crosspiece (3) comprises an upper seat (36) extending into the connecting portion (32) under the upper portion (31) of the crosspiece; said upper seat (36) extending longitudinally in the connecting portion (32) for the entire length of the crosspiece; said trailer comprising second fastening means (8) for fastening the sliding means to the crosspiece (3), extending into said upper seat (36) of the crosspiece.

6. The trailer (100) according to claim 5, wherein said second fastening means (8) comprise self-tapping screws (80), rivets or nails that are inserted from above onto the sliding means (4), passing through the sliding means (4) and an upper portion (31) of the crosspiece and ending in the upper seat (36) of the crosspiece.

7. The trailer (100) according to claim 5, wherein each crosspiece has an upper portion (31) with a longitudinal channel (31a) extending in the upper portion (31) of the crosspiece, for the entire length of the crosspiece (3), and communicating with the upper seat (36) of the crosspiece, and said sliding means have through holes (41) aligned with said longitudinal channel (31a) of the upper portion of the crosspiece; and
said second fastening means (8) comprise threaded blocks (6) disposed in said upper seat (36) of the crosspiece and screws (7) inserted into the through holes (41) of the sliding means and the longitudinal channel (31a) of the upper portion of the crosspiece in order to be screwed into the threaded blocks (6)

8. The trailer (100) according to any of claims 5 to 7, wherein said crosspiece (3) comprises two ribs (37) extending longitudinally in the upper seat (36) of each crosspiece, so that a lower portion of the threaded block (6) abuts against the ribs (37) of the upper seat (36) of the crosspiece and the threaded block is retained in position in the upper seat (36) of the crosspiece.

9. The trailer according to any of claims 6 to 8, wherein each slat (20) is a profile having a C-shaped cross-section, comprising an upper wall (22), two side walls (23) and two lower walls (24) separated from each other by an opening (25) that provides access to a channel (26) of the slat; and
said screws (8; 70) of the second fastening means (8) have a head (71; 81) that is arranged in said opening (25) that provides access to the channel (26) of the slat.

10. The trailer (100) according to any of claims 7 to 9, wherein each threaded block (6) is made of steel and customized according to the dimensions of the lower and upper seats (34, 36) of the crosspiece.

11. The trailer (100) according to any of the preceding claims, wherein the sliding means (4) comprise at least one U-bolt (40) suitable for being fitted onto the upper portion (31) of each crosspiece and suitable for being positioned under one or more slats (20) of the walking floor (2).

12. The trailer (100) according to any of the preceding claims, wherein the sliding means (4) are made of plastic material.

13. The trailer (100) according to any of the preceding claims, wherein each crosspiece (3) has a lightening channel (38) extending in the central portion (33) of the connecting portion (32), longitudinally, for the entire length of the crosspiece.

14. The trailer (100) according to any of the preceding claims, wherein each crosspiece (3) is made of aluminum or steel.
